# EUROPÄISCHE PATENTSCHRIFT

(11) **EP 3 563 125 B1**
(45) Veröffentlichungstag und Bekanntmachung des Hinweises auf die Patenterteilung: **13.12.2023**
(21) Anmeldenummer: 17832227.7
(22) Anmeldetag: 21.12.2017
(51) Int. Cl.: G01G 19/44, G01G 21/23, G01G 23/37

(54) **MODULARES SENSORSYSTEM UND VERWENDUNG DES MODULAREN SENSORSYSTEMS IN EINER LATTENROSTMATRATZE**
MODULAR SENSOR SYSTEM AND USE OF THE MODULAR SENSOR SYSTEM IN A SLATTED FRAME MATTRESS
SYSTÈME MODULAIRE DE CAPTEURS ET UTILISATION DU SYSTÈME MODULAIRE DE CAPTEUR DANS UN MATELAS POUR SOMMIER À LATTES

(30) Priorität: 27.12.2016 DE 102016015449; 27.12.2016 DE 202016007965 U
(43) Veröffentlichungstag der Anmeldung: 06.11.2019
(73) Patentinhaber: LAROMED GmbH, 24879 Schleswig (DE)
(72) Erfinder: NIEUWENHUIS, Günter, 53919 Weilerswist (DE)
(86) Internationale Anmeldenummer: PCT/EP2017/083985
(87) Internationale Veröffentlichungsnummer: WO 2018/122085

(56) Entgegenhaltungen:
- CH-A1- 706 013
- US-A- 5 780 781
- US-B1- 7 069 610

## Beschreibung

Hiermit wird der gesamte Inhalt der Prioritätsanmeldungen DE 20 2016 007 965.5 und DE 10 2016 015 449.7 durch Bezugnahme Bestandteil der vorliegenden Anmeldung.

Die Erfindung betrifft ein modulares Sensorsystem, insbesondere für die Verwendung in einer Lattenrostmatratze nach dem Oberbegriff des unabhängigen Anspruchs.

Das erfinderische modulare Sensorsystem besteht aus zumindest drei Modulen, die in einer Ebene sandwichartig miteinander verbaut sind und zumindest einen Sensorträger, zumindest einen Sensor, bevorzugt einen Wägezellensensor mit zumindest einer Gewichtsverteilleiste aufweist.

Die Kopplung des Sensors an die Gewichtsverteilleiste erfolgt direkt und bildet die Mess- bzw. Sensorpunkte in Abhängigkeit von den zu messenden Parametern, z.B. punktuell, flächig und/oder erhaben aus.

Durch den Systemaufbau der einzelnen Module in einer Ebene wird eine sehr flache Bauweise erreicht, die in der Geometrie und Funktion den bekannten Latten eines Lattenrostes bzw. den Latten einer Lattenrostmatratze entsprechen und diese durch einfachen Austausch ersetzen können.

Der Austausch bestehender Latten in Matratzensystemen bzw. ganzen Lattenrosten in herkömmlichen Systemen durch das erfinderische modulare Sensorsystem, die auch einzeln oder in Gruppen erfolgen kann, ist dabei jederzeit einfach, auch ohne den Einsatz von Werkzeugen möglich. Die Kombination bestehender Latten mit dem modularen Sensorsystem ist ebenfalls einfach konfigurierbar.

Die jeweiligen Sensoren an den Messpunkten bevorzugt für Gewicht, Temperatur, Feuchte, Beschleunigung und/oder einer Positionsbestimmung im Raum, z.B. auch über Ultrabreitband (UWB), WLAN, Bluetooth oder andere Funktechnik mit geeigneten Frequenzen, sind mit einem Smart Beacon Device (SBD) gekoppelt oder dies ist im Sensor integriert bzw, der Sensor ist im Smart Beacon Device (SBD) integriert.

Unter derartigen Smart Beacon Devices (SBD) im Sinne der Erfindung werden Kommunikationseinheiten verstanden, die z.B. mittels drahtlosem Low Energy Bluetooth eine bidirektionale digitale Kommunikationsinfrastruktur aufbauen können und in Verbindung mit einem Gateway untereinander vermaschte Netzwerke aufbauen, welche zudem über das Gateway mit dem Internet verbunden werden können. Jedes SBD kann Daten senden und empfangen und mittels I / O-Ports/Schnittstellen - Informationen sammeln, speichern, verarbeiten und übertragen.

Beim erfinderischen modularen Sensorsystem ist zumindest ein SBD mit dem Sensor koppelbar bzw. in diesen integrierbar, um Sensorinformationen zu Gewicht, Temperatur, Feuchtigkeit, Beschleunigung und/oder in Verbindung mit dem vermaschten Netzwerk Positionsdaten im Raum in Bezug zum Messpunkt zu sammeln, zu speichern, zu verarbeiten und z.B. an eine zentrale Datenverarbeitungs- und Kontrolleinheit zu übermitteln.

Unter koppelbar wird im Sinne der Erfindung die elektrische, elektronische und/oder elektromagnetische Verbindung des jeweiligen Sensors mit abgreifbaren Parametern in analoger und/oder digitalisierter Form verstanden.

Unter integrierbar wird im Sinne der Erfindung die konstruktive, bauliche Verbindung bzw. Vereinigung des jeweiligen Sensors mit dem SBD verstanden, wobei im günstigsten Fall keine redundanten Bauteile erforderlich sind.

Beim erfinderischen modularen Sensorsystem sind auf diese Weise durch den Einsatz geeigneter Sensorik Module zumindest folgende Messungen durchführbar:
Gewichtsmessung als Punktmessung, Linienmessung, Flächenmessung. Beschleunigungsmessung als Punktmessung, Linienmessung, Flächenmessung. Temperaturmessung als Punktmessung, Linienmessung, Flächenmessung. Feuchtemessung als Punktmessung, Linienmessung, Flächenmessung. Positionsbestimmungsmessung im Raum als Punktmessung, Linienmessung, Flächenmessung.

Die Messungen erfolgen in situ, sequentiell oder kontinuierlich, auch in Kombination. Die Messungen selbst sind regel- oder steuerbar. Die Messparameter selbst sind als Aktoren in der Lage selbst zu regeln oder zu steuern. Die Anbindung von definierten Ereignissen der Messungen des erfinderischen modularen Sensorsystems an Multimediasysteme, wie Bild, Video oder dergleichen, ergänzen die Möglichkeiten der Erfindung.

SBD können mittels des vermaschten Netzes untereinander aber auch mit dem Internet kommunizieren. Damit sind auch die Anforderungen für "internet oft the things" durch das erfinderische modulare Sensorsystem erfüllt.

Auswertungen statistischer Art, Trendanalysen, Mustererkennung und Big Data Analysen sind mit dem Einsatz des erfinderischen modularen Sensorsystems durchführbar. Alle nutzerspezifischen Daten der Steuerung und/oder Regelung werden dabei programmtechnisch erfasst, verarbeitet, dokumentiert, ggf. verschlüsselt und für zugangsberechtigte Anwender über ein Portal oder bekannte Kommunikationswege abrufbar zur Verfügung gestellt.

Durch den geringen Energieverbrauch kann ein SBD im Alleinbetrieb über eine sehr langen Zeitraum - mehrere Monate bis zu Jahren - mit einer Batterieladung kommunizieren und ist so insbesondere für ein kabellosen Einsatz geeignet.

Mit dem erfinderischen modularen Sensorsystem bieten sich hier weitere Möglichkeiten, um einen nahezu "lebenslangen" Betrieb von Sensoren und SBD sicher zu stellen. Da das erfinderische modulare Sensorsystem systembedingt durch die aktive Messung der Änderungen von Parametern, wie z.B. Gewicht, Temperatur, Feuchtigkeit und/oder Beschleunigung auch für energy harvesting zur Gewinnung kleiner Mengen elektrischer Energie ausgelegt ist, kann das erfinderische modulare Sensorsystem gleichzeitig die Energieversorgung eines/seines/mehrerer SBD übernehmen. Dies kann z.B. durch das Abgreifen von Energie an den Sensoren als Ernergiewandler erfolgen, die temporär nicht im Messbetrieb geschaltet sind.

Damit ist ein einfaches universell verbaubares modulares Sensorsystem bereitgestellt, welches eine sehr flache Bauweise aufweist, womit auch gängige Latten in einem Lattenrost ersetzt werden können.

Aus physikalischen Überlegungen sollte ein derartiges erfinderisches modulares Sensorsystem, welches Parameter, wie z.B. Gewicht, Temperatur, Feuchtigkeit, Beschleunigung und/oder in Verbindung mit dem vermaschten Netzwerk Positionsdaten im Raum in Bezug zum Messpunkt misst, jeweilige so nah wie möglich am Körper des zu messenden Lebewesens platziert sein, ohne dabei den Liegekomfort zu beeinträchtigen. Deshalb empfiehlt sich der Einsatz bevorzugt in einer Lattenrostmatratze.

Der Lattenrost liegt bei einer Lattenrostmatratze aus dem Stand der Technik auf zwei seitlichen Längsholmen und die Person liegt lediglich auf einer dünnen Auflage direkt auf den Latten. Im Unterschied zu herkömmlichen Betten, bei denen eine Matratze auf einem getrennten Lattenrost mit starrem Rahmen liegt, wobei der Lattenrost in der Regel direkt am Rahmen fixiert ist, wird bei der Lattenrostmatratze das Körperprofil und Körpergewicht von der Auflage direkt über die einzelnen Latten, die mit der Matratze den Lattenrost bilden, an die Seitenholme übertragen. Dadurch kann der Lattenrost körpernah die Form des Körperprofils annehmen.

Die konstruktiven Merkmale der in der DE 39 36 788 C2 und DE 10 2008 031 043 A1 gezeigten Lattenrostmatratze bieten die Möglichkeiten einer genauen körpernahen Messung über das erfinderische modulares Sensorsystem daher eher, als übliche Lattenroste mit getrennten Matratzen, bei denen die Körpernähe der Latten, die durch das erfinderische modulares Sensorsystem ersetzt werden, von der Stärke der Matratze abhängt.

Aus dem Stand der Technik ist eine Sensorlattenrost für eine Lattenrostmatratze aus der DE 10 2010 021 363 A1 bekannt, der gängigen Druckmatten aus Folienmaterial, konstruktiv überlegen ist, weil ein Langzeiteinsatz und ein Feuchtigkeitstransport unterstützt wir. Dabei handelt es sich um einen flexiblen körpernahen Sensorlattenrost für Lattenrostmatratzen mit dünner Auflage, um z.B. von bettgebundenen Personen Druck, Feuchtigkeit und Wärme zu erfassen. Die Druck-, Feuchtigkeits-, Temperatur- und Weg-Sensoren sind dabei allerdings einzeln auf den jeweiligen Latten bzw. Leisten der Lattenrostmatratze aufgebracht.

US 5,780,781 offenbart eine Vorrichtung aus vier miteinander verbundenen modularen Einheiten mit einer Wiegefunktion. Die modularen Einheiten sind flächig ausgebildet. Die gesamte Vorrichtung ist dazu vorgesehen, auf einen aus vier entsprechenden, zueinander beweglichen Teilen eines Rahmens eines Bettes gelegt zu werden.

Der Erfindung liegt die Aufgabe zugrunde, ein modulares Sensorsystem bereit zu stellen, dass neben der originären Funktion als "Latte" eine Messung von Körperfunktionen, der Detektion, z.B. Anwesenheit, der Überwachung, z.B. Parameterveränderungen und/oder Positionsbestimmung ermöglicht.

Eine weitere Aufgabe ist es, ein modulares Sensorsystem bereit zu stellen, dass einfach, schnell, servicefreundlich und kostengünstig in einem bestehenden Bett, bevorzugt einem Bett mit Lattenrostmatratze, einsetzbar ist.

Diese Aufgabe wird durch die erfinderische Vorrichtung gemäß Anspruch 1 und den Ausgestaltungen nach den abhängigen Ansprüchen gelöst.

Die erfindungsgemäße Vorrichtung beansprucht mit Anspruch 1 ein

Modulares Sensorsystem aus zumindest drei Modulen mit zumindest einem Sensor, zumindest einem Sensorträger und zumindest einer Gewichtsverteilleiste, die in einer Ebene sandwichartig miteinander verbindbar sind.

Weiter wird die Verwendung des modularen Sensorsystems in einer Lattenrostmatratze beansprucht.

Insgesamt wird durch die Erfindung eine multifunktionales modulares Sensorsystem Bereitgestellt, welches mit geringem Montageaufwand auf einfache und zuverlässige Weise auch in bestehende Systeme integriert werden kann.

Für die Module Sensorträger und Gewichtsverteilleiste sind bekannte Materialien, wie Aluminium, Stahl, Holz, PVC, GFK und/oder Verbundwerkstoff kombinierbar.

Durch die einfachen Geometrien im Aufbau der Konstruktion sind diese problemlos in vorhandene Systeme integrierbar oder nachrüstbar.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine erste beispielhafte Bauausführung des erfinderischen modularen Sensorsystems im Schnitt in Seitenansicht.
- Fig. 2: eine zweite beispielhafte Bauausführung des erfinderischen modularen Sensorsystems im Schnitt in Seitenansicht.
- Fig. 3: eine dritte beispielhafte Bauausführung des erfinderischen modularen Sensorsystems im Schnitt in Seitenansicht.
- Fig. 4: eine vierte beispielhafte Bauausführung des erfinderischen modularen Sensorsystems im Schnitt in Seitenansicht.
- Fig. 5: eine erste beispielhafte Bauausführung des erfinderischen modularen Sensorsystems im Schnitt in Seitenansicht nach Fig. 1 mit gekoppeltem Smart Beacon Device (SBD).
- Fig. 6: eine zweite beispielhafte Bauausführung des erfinderischen modularen Sensorsystems im Schnitt in Seitenansicht nach Fig. 2 mit gekoppeltem Smart Beacon Device (SBD) und einer internen Spannungsversorgung.
- Fig. 7: eine dritte beispielhafte Bauausführung des erfinderischen modularen Sensorsystems im Schnitt in Seitenansicht nach Fig. 3 mit jeweils gekoppelten Smart Beacon Devices (SBD) und einer internen Spannungsversorgung.
- Fig. 8: eine vierte beispielhafte Bauausführung des erfinderischen modularen Sensorsystems im Schnitt in Seitenansicht nach Fig. 4 mit jeweils gekoppelten Smart Beacon Devices (SBD) und einer externen Spannungsversorgung.
- Fig. 9: eine beispielhafte Bauausführung des Moduls Sensorträger des erfinderischen modularen Sensorsystems in perspektivischer Aufsicht, hier in flacher Ausführung (links) und in u-förmiger Ausführung (rechts).
- Fig. 10: eine beispielhafte Bauausführung des Moduls Sensorträger des erfinderischen modularen Sensorsystems in perspektivischer Aufsicht, hier in massiver Ausführung mit flacher Aussparung an einem ersten distalen Ende (links) und in massiver Ausführung mit u-förmiger Formaussparung an einem ersten Distalen Ende (rechts).
- Fig. 11: eine beispielhafte Bauausführung des Moduls Sensorträger des erfinderischen modularen Sensorsystems in perspektivischer Aufsicht, hier in massiver Ausführung mit flacher Aussparung innerhalb des Sensorträgers (links) und in massiver Ausführung mit u-förmiger Formaussparung innerhalb des Sensorträgers (rechts).
- Fig. 12: eine weitere beispielhafte Bauausführung des erfinderischen modularen Sensorsystems im Schnitt in Queransicht als A1 mit quadratischer U-Form des Sensorträgers mit flächiger Druckverteilleiste, als B1 mit rechteckiger U-Form des Sensorträgers mit flächiger Druckverteilleiste, als C1 mit offenem trapezförmigen Sensorträger mit flächiger Druckverteilleiste, als D1 mit geschlossenem trapezförmigen Sensorträger mit flächiger Druckverteilleiste.
- Fig. 13: eine weitere beispielhafte Bauausführung des erfinderischen modularen Sensorsystems im Schnitt in Queransicht als A2 mit flächigem Sensorträger mit quadratische U-Form Druckverteilleiste, als B2 mit flächigem Sensorträger mit rechteckiger U-Form Druckverteilleiste, als C2 mit flächigem Sensorträger mit offener trapezförmiger Druckverteilleiste, als D2 mit flächigem Sensorträger mit geschlossener trapezförmiger Druckverteilleiste.
- Fig. 14: eine weitere beispielhafte Bauausführung des erfinderischen modularen Sensorsystems im Schnitt in Queransicht als E1 mit rundrohrförmigem Sensorträger mit flächiger Druckverteilleiste, als E2 mit flächigem Sensorträger mit rundrohrförmiger Druckverteilleiste, als F1 mit ovalrohrförmigem Sensorträger mit flächiger Druckverteilleiste, als F2 mit flächigem Sensorträger mit ovalrohrförmiger Druckverteilleiste.
- Fig. 15: eine weitere beispielhafte Bauausführung des erfinderischen modularen Sensorsystems im Schnitt in Queransicht als G1 mit quadratischem U-Form Sensorträger - innen - mit quadratischer U-Form Druckverteilleiste, als G2 mit quadratischem U-Form Sensorträger - außen - mit quadratischer U-Form Druckverteilleiste, als H1 mit rechteckigem U-Form Sensorträger-innen - mit rechteckiger U-Form Druckverteilleiste, als H2 mit rechteckigem U-Form Sensorträger - außen - mit rechteckiger U-Form Druckverteilleiste.
- Fig. 16: eine weitere beispielhafte Bauausführung des erfinderischen modularen Sensorsystems im Schnitt in Queransicht als I1 mit offenem trapezförmigem Sensorträger - außen - mit geschlossener trapezförmiger Druckverteilleiste, als I2 mit geschlossenem trapezförmigem Sensorträger - innen - mit geschlossener trapezförmiger Druckverteilleiste, als J1 mit geschlossenem trapezförmigem Sensorträger - außen - mit offener trapezförmiger Druckverteilleiste, als J2 mit offenem trapezförmigem Sensorträger - innen-mit geschlossener trapezförmiger Druckverteilleiste.
- Fig. 17: eine weitere beispielhafte Bauausführung des erfinderischen modularen Sensorsystems im Schnitt in Queransicht als K1 mit geschlossenem trapezförmigem Sensorträger - außen - mit quadratischer U-Form Druckverteilleiste, als K2 mit quadratischem U-Form Sensorträger - innen-mit geschlossener trapezförmiger Druckverteilleiste, als L1 mit geschlossenem trapezförmigem Sensorträger - innen - mit rechteckiger U-Form Druckverteilleiste, als L2 mit rechteckigem U-Form Sensorträger-außen - mit geschlossener trapezförmiger Druckverteilleiste.
- Fig. 18: eine weitere beispielhafte Bauausführung des erfinderischen modularen Sensorsystems im Schnitt in Queransicht als M1 mit halbrundrohrförmigem Sensorträger - bündig - mit halbrundrohrförmiger Druckverteilleiste, als N1 mit halbrundrohrförmigem - innen - Sensorträger mit halbrundrohrförmiger Druckverteilleiste, als N2 mit halbrundrohrförmigem - außen - Sensorträger mit halbrundförmiger Druckverteilleiste.
- Fig. 19: eine weitere beispielhafte Bauausführung des erfinderischen modularen Sensorsystems im Schnitt in Queransicht als O1 mit halbovalrohrförmigem-bündigem - Sensorträger mit halbovalrohrförmiger Druckverteilleiste, als P1 mit halbovalrohrförmigem - innen -Sensorträger mit halbovalrohrförmiger Druckverteilleiste, als P2 mit halbovalrohrförmigem - außen - Sensorträger mit halbovalrohrörmiger Druckverteilleiste.
- Fig. 20: eine fünfte beispielhafte Bauausführung des erfinderischen modularen Sensorsystems im Schnitt in Seitenansicht.
- Fig. 21: eine sechste beispielhafte Bauausführung des erfinderischen modularen Sensorsystems im Schnitt in Seitenansicht.
- Fig. 22: beispielhafte Bauausführung der Mess- bzw, Sensorpunkte des Moduls Gewichtsverteilleiste des erfinderischen modularen Sensorsystems in Aufsicht.
- Fig. 23: beispielhafte Bauausführung der Mess- bzw, Sensorpunkte des Moduls Gewichtsverteilleiste als Flächenelemente in vertikaler und horizontaler Anordnung des erfinderischen modularen Sensorsystems in Aufsicht.
- Fig. 24: beispielhafte Bauausführung der Mess- bzw, Sensorpunkte des Moduls Gewichtsverteilleiste als Flächenelemente in streifenförmiger Anordnung des erfinderischen modularen Sensorsystems in Aufsicht.
- Fig. 25: Aufbau einer Lattenrostmatratze aus dem **Stand der Technik**
- Fig. 26: Beispielhafte Liegepositionen auf einer Lattenrostmatratze aus dem **Stand der Technik**

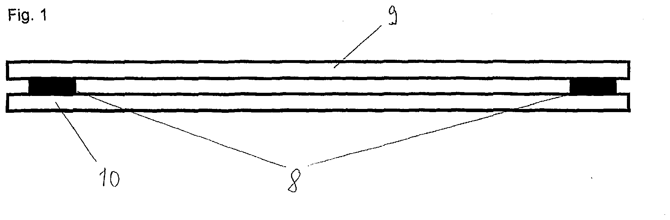

Die Figuren zeigen im Einzelnen in
**Fig. 1** eine erste beispielhafte Bauausführung des erfinderischen modularen Sensorsystems im Schnitt in Seitenansicht mit einer Gewichtsverteilleiste 9 und einem Sensorträger 10 zwischen denen zwei Sensoren 8 gezeigt sind, die direkt mit der Gewichtsverteilleiste 9 gekoppelt sind.

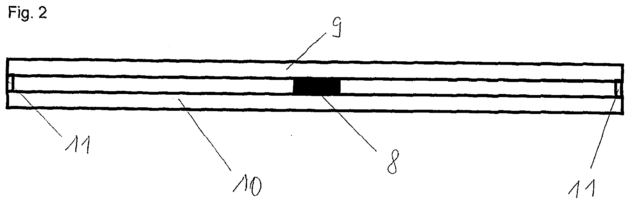

**Fig. 2** eine zweite beispielhafte Bauausführung des erfinderischen modularen Sensorsystems im Schnitt in Seitenansicht mit einer Gewichtsverteilleiste 9 und einem Sensorträger 10 zwischen denen ein Sensoren 8 gezeigt ist, der direkt mit der Gewichtsverteilleiste 9 gekoppelt ist. An den distalen Enden der Gewichtsverteilleiste 9 und dem Sensorträger 10 sind jeweils ein Fixierpunkt 11 angebracht, die beide Module miteinander verbinden.

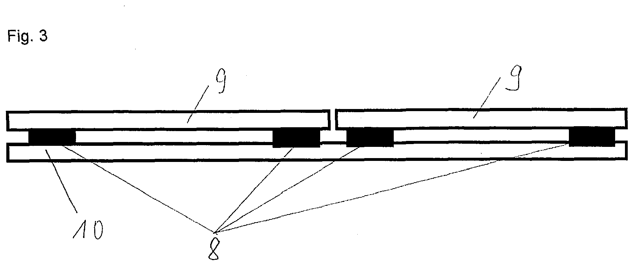

**Fig. 3** eine dritte beispielhafte Bauausführung des erfinderischen modularen Sensorsystems im Schnitt in Seitenansicht mit zwei Gewichtsverteilleiste 9 und einem Sensorträger 10 zwischen denen jeweils zwei Sensoren 8 gezeigt sind, die direkt mit der jeweiligen Gewichtsverteilleiste 9 gekoppelt sind. Es ist selbstverständlich auch möglich mehr als zwei Gewichtsverteilleisten 9 auf einem Sensorträger 10 mit jeweils zwei oder auch mehreren Sensoren 8anzubringen.

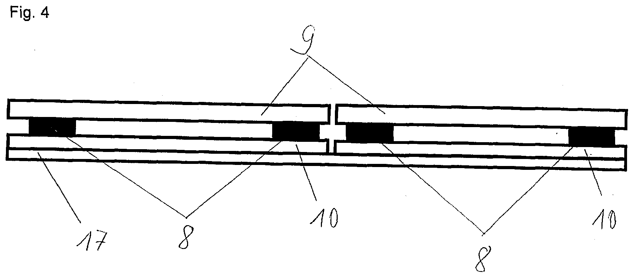

**Fig. 4** eine vierte beispielhafte Bauausführung des erfinderischen modularen Sensorsystems im Schnitt in Seitenansicht mit zwei Gewichtsverteilleiste 9 und zwei Sensorträgern 10 zwischen denen jeweils zwei Sensoren 8 gezeigt sind, die direkt mit der jeweiligen Gewichtsverteilleiste 9 gekoppelt sind, dabei liegen die jeweiligen Sensorträger 10 auf einem Trägerelement 17 auf. Es ist selbstverständlich auch möglich mehr als zwei Gewichtsverteilleisten 9 auf jeweiligen Sensorträgern 10 mit jeweils zwei oder auch mehreren Sensoren 8 anzubringen, die auf einem Trägerelement 17 aufliegen.

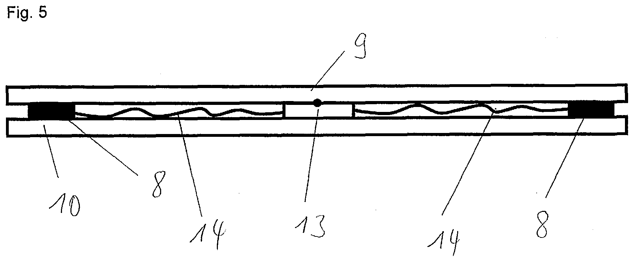

**Fig. 5** eine erste beispielhafte Bauausführung des erfinderischen modularen Sensorsystems im Schnitt in Seitenansicht nach Fig. 1 mit gekoppeltem Smart Beacon Device (SBD) 13. Die jeweilige Verbindung 14 erfolgt durch eine Kabelverbindung und/oder funktechnisch.

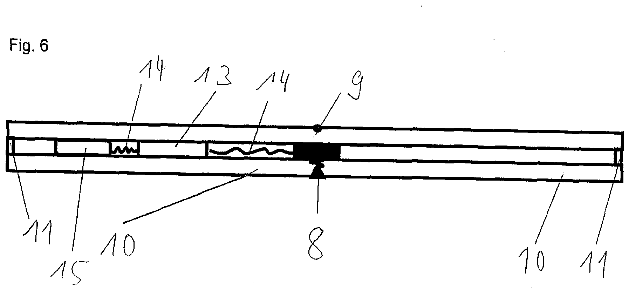

**Fig. 6** eine zweite beispielhafte Bauausführung des erfinderischen modularen Sensorsystems im Schnitt in Seitenansicht nach Fig. 2 mit gekoppeltem Smart Beacon Device (SBD) 13 und einer internen Stromversorgung 15. Die jeweilige Verbindung 14 erfolgt durch eine Kabelverbindung und/oder funktechnisch/induktiv.

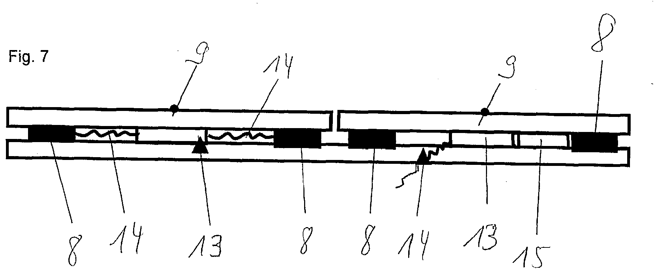

**Fig. 7** eine dritte beispielhafte Bauausführung des erfinderischen modularen Sensorsystems im Schnitt in Seitenansicht nach Fig. 3 mit jeweils gekoppelten Smart Beacon Devices (SBD) 13 und einer internen Stromversorgung 15. Die jeweilige Verbindung 14 erfolgt durch eine Kabelverbindung und/oder funktechnisch/induktiv.

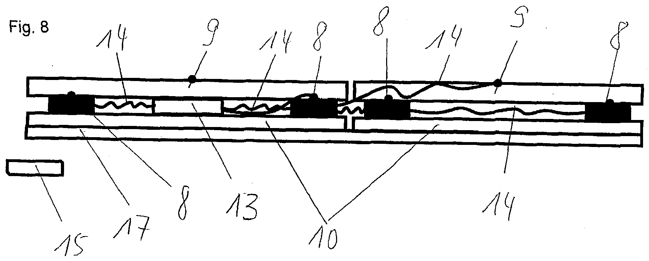

**Fig. 8** eine vierte beispielhafte Bauausführung des erfinderischen modularen Sensorsystems im Schnitt in Seitenansicht nach Fig. 4 mit jeweils gekoppelten Smart Beacon Devices (SBD) 13 und einer externen Stromversorgung 15. Die jeweilige Verbindung 14 erfolgt durch eine Kabelverbindung und/oder funktechnisch/induktiv.

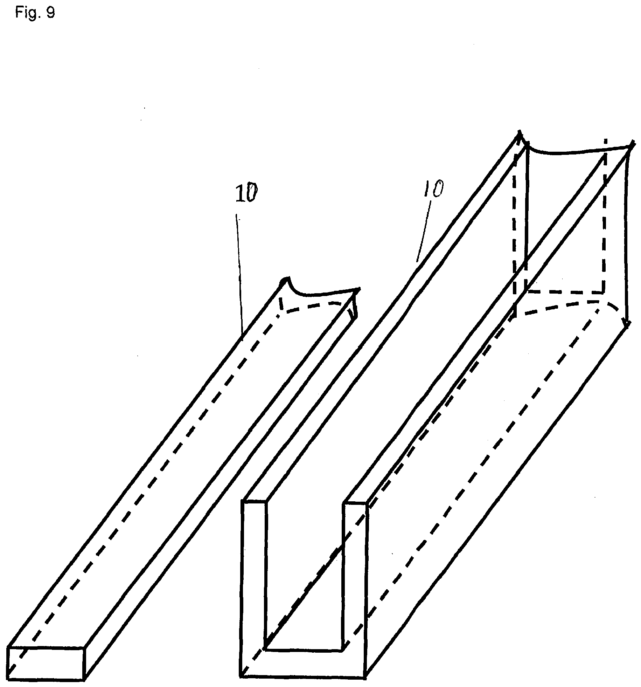

**Fig. 9** eine beispielhafte Bauausführung des Moduls Sensorträger 10 des erfinderischen modularen Sensorsystems in perspektivischer Aufsicht, hier in flacher Ausführung (links) und in u-förmiger Ausführung (rechts).

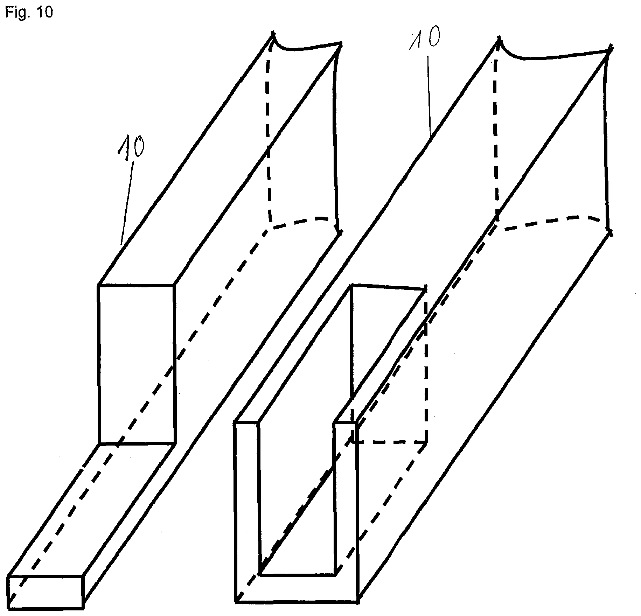

**Fig. 10** eine beispielhafte Bauausführung des Moduls Sensorträger 10 des erfinderischen modularen Sensorsystems in perspektivischer Aufsicht, hier in massiver Ausführung mit flacher Aussparung an einem ersten distalen Ende (links) und in massiver Ausführung mit u-förmiger Formaussparung an einem ersten Distalen Ende (rechts).

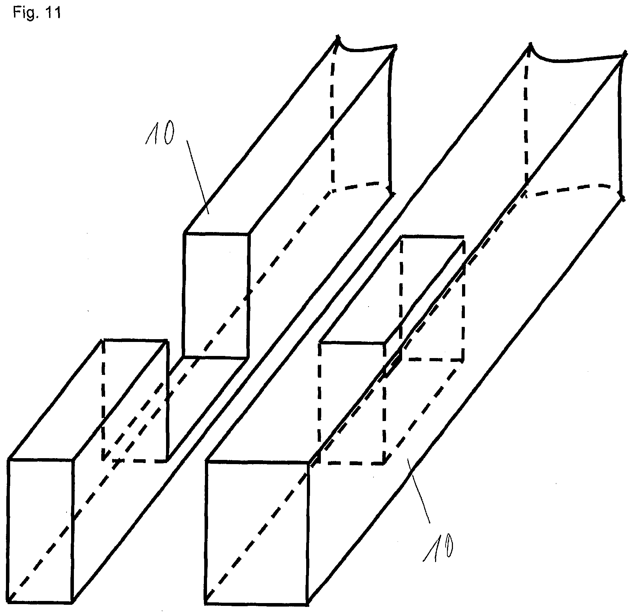

**Fig. 11** eine beispielhafte Bauausführung des Moduls Sensorträger 10 des erfinderischen modularen Sensorsystems in perspektivischer Aufsicht, hier in massiver Ausführung mit flacher Aussparung innerhalb des Sensorträgers 10 (links) und in massiver Ausführung mit u-förmiger Formaussparung innerhalb des Sensorträgers 10 (rechts).

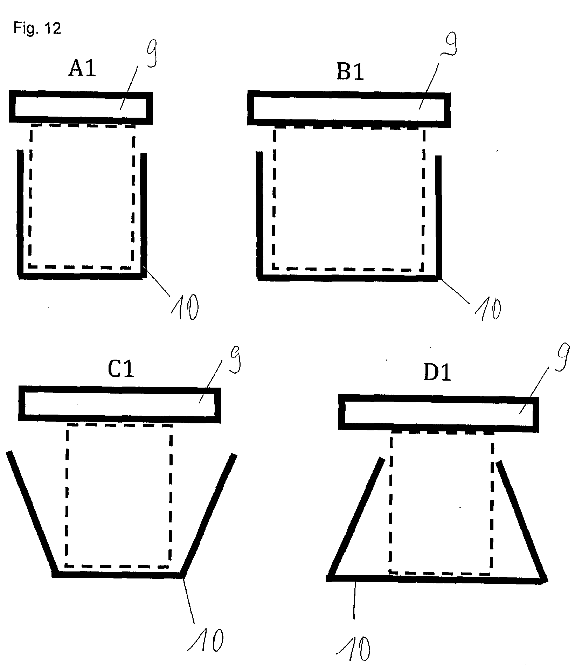

**Fig. 12** eine weitere beispielhafte Bauausführung des erfinderischen modularen Sensorsystems im Schnitt in Queransicht als A1 mit quadratischer U-Form des Sensorträgers 10 mit flächiger Druckverteilleiste/Gewichtsverteilleiste 9, als B1 mit rechteckiger U-Form des Sensorträgers 10 mit flächiger Druckverteilleiste/Gewichtsverteilleiste 9, als C1 mit offenem trapezförmigen Sensorträger 10 mit flächiger Druckverteilleiste/Gewichtsverteilleiste 9, als D1 mit geschlossenem trapezförmigen Sensorträger 10 mit flächiger Druckverteilleiste/Gewichtsverteilleiste 9.

Der gestrichelte Bereich in den **Figuren 12 bis 19** zeigt den Raum für die Sensorik mit Sensor 8, Verbindung 14, SBD 13 und Stromversorgung 15 oder dergl..

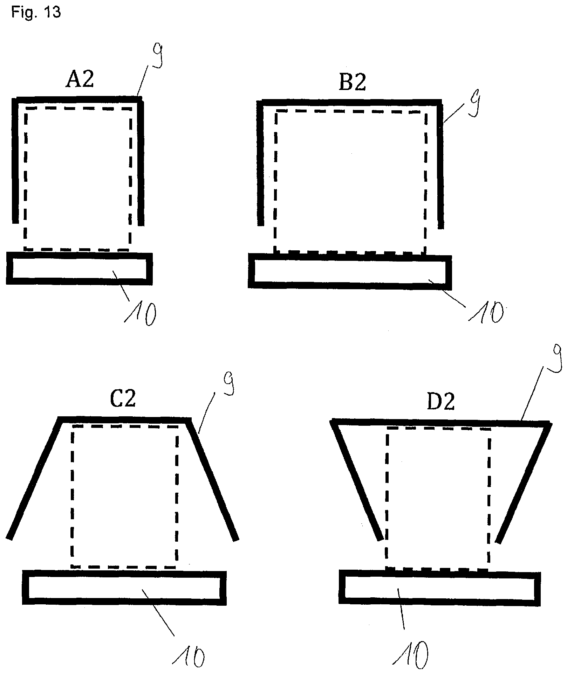

**Fig. 13** eine weitere beispielhafte Bauausführung des erfinderischen modularen Sensorsystems im Schnitt in Queransicht als A2 mit flächigem Sensorträger 10 mit quadratische U-Form Druckverteilleiste/Gewichtsverteilleiste 9, als B2 mit flächigem Sensorträger 10 mit rechteckiger U-Form Druckverteilleiste/Gewichtsverteilleiste 9, als C2 mit flächigem Sensorträger 10 mit offener trapezförmiger Druckverteilleiste/Gewichtsverteilleiste 9, als D2 mit flächigem Sensorträger 10 mit geschlossener trapezförmiger Druckverteilleiste / Gewichtsverteilleiste 9.

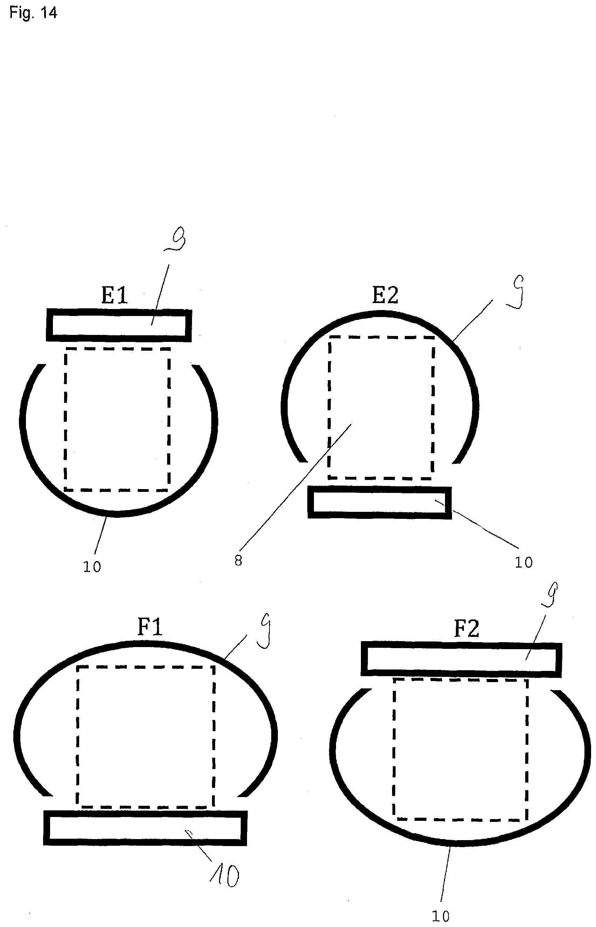

**Fig. 14** eine weitere beispielhafte Bauausführung des erfinderischen modularen Sensorsystems im Schnitt in Queransicht als E1 mit rundrohrförmigem Sensorträger 10 mit flächiger Druckverteilleiste/Gewichtsverteilleiste 9, als E2 mit flächigem Sensorträger 10 mit rundrohrförmiger Druckverteilleiste/Gewichtsverteilleiste 9, als F1 mit ovalrohrförmiger Druckverteilleiste / Gewichtsverteilleiste 9 mit flächigem Sensorträger 10, als F2 mit flächiger ovalrohrförmiger Druckverteilleiste / Gewichtsverteilleiste 9 mit Sensorträger 10.

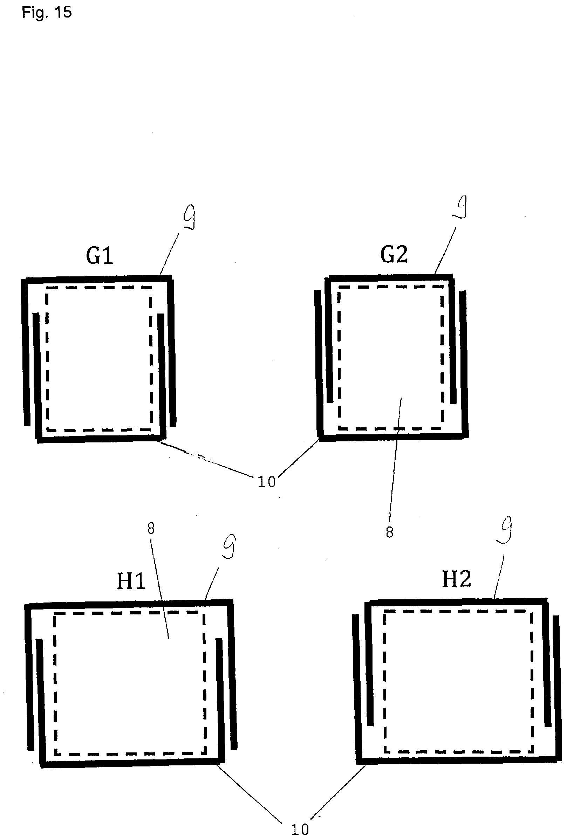

**Fig. 15** eine weitere beispielhafte Bauausführung des erfinderischen modularen Sensorsystems im Schnitt in Queransicht als G1 mit quadratischem U-Form Sensorträger 10 - innen - mit quadratischer U-Form Druckverteilleiste /Gewichtsverteilleiste 9, als G2 mit quadratischem U-Form Sensorträger 10 - außen - mit quadratischer U-Form Druckverteilleiste/Gewichtsverteilleiste 9, als H1 mit rechteckigem U-Form Sensorträger 10 - innen - mit rechteckiger U-Form Druckverteilleiste/Gewichtsverteilleiste 9, als H2 mit rechteckigem U-Form Sensorträger 10 - außen - mit rechteckiger U-Form Druckverteilleiste / Gewichtsverteilleiste 9.

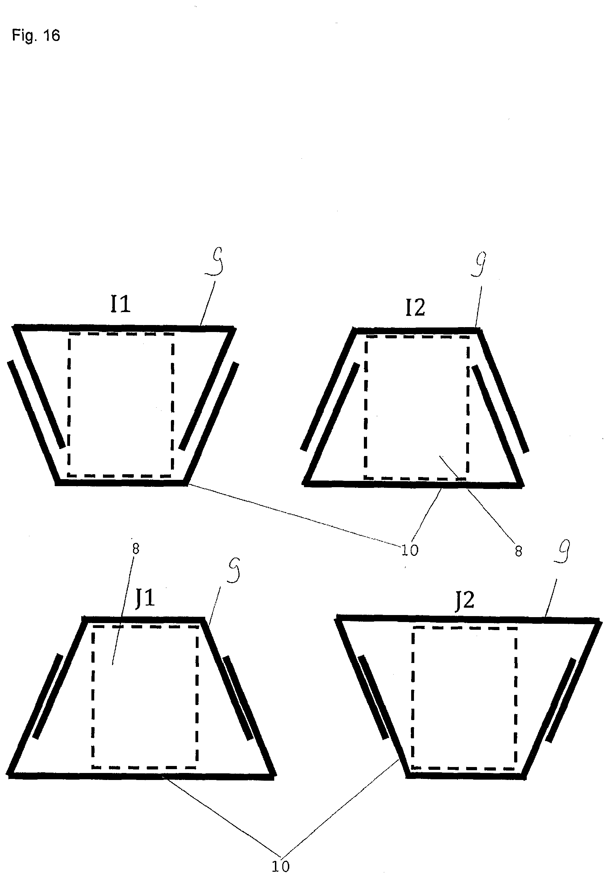

**Fig. 16** eine weitere beispielhafte Bauausführung des erfinderischen modularen Sensorsystems im Schnitt in Queransicht als I1 mit offenem trapezförmigem Sensorträger 10 - außen - mit geschlossener trapezförmiger Druckverteilleiste / Gewichtsverteilleiste 9, als I2 mit geschlossenem trapezförmigem Sensorträger 10 - innen - mit geschlossener trapezförmiger Druckverteilleiste/Gewichtsverteilleiste 9, als J1 mit geschlossenem trapezförmigem Sensorträger 10 - außen - mit offener trapezförmiger Druckverteilleiste/Gewichtsverteilleiste 9, als J2 mit offenem trapezförmigem Sensorträger 10 - innen - mit geschlossener trapezförmiger Druckverteilleiste/Gewichtsverteilleiste 9.

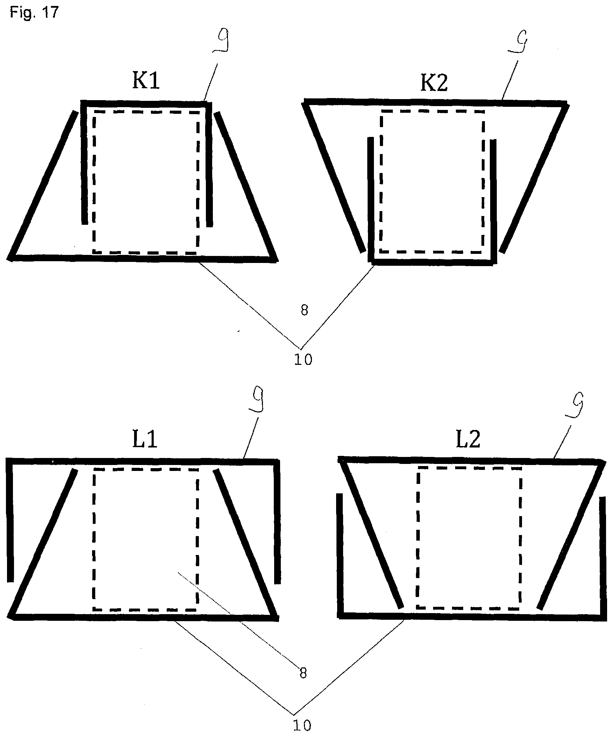

**Fig. 17** eine weitere beispielhafte Bauausführung des erfinderischen modularen Sensorsystems im Schnitt in Queransicht als K1 mit geschlossenem trapezförmigem Sensorträger 10 - außen - mit quadratischer U-Form Druckverteilleiste / Gewichtsverteilleiste 9, als K2 mit quadratischem U-Form Sensorträger 10 - innen - mit geschlossener trapezförmiger Druckverteilleiste/Gewichtsverteilleiste 9, als L1 mit geschlossenem trapezförmigem Sensorträger 10 - innen - mit rechteckiger U-Form Druckverteilleiste/Gewichtsverteilleiste 9, als L2 mit rechteckigem U-Form Sensorträger 10 - außen - mit geschlossener trapezförmiger Druckverteilleiste / Gewichtsverteilleiste 9.

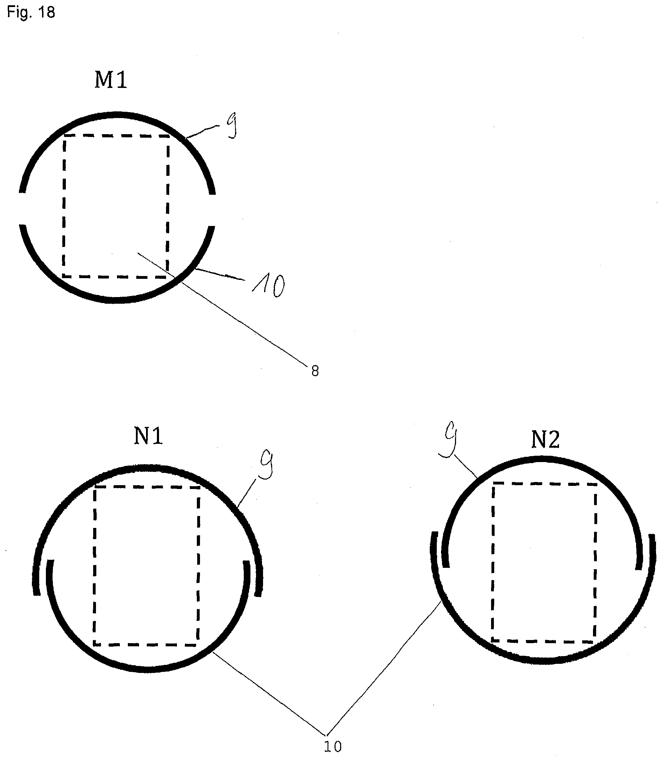

**Fig. 18** eine weitere beispielhafte Bauausführung des erfinderischen modularen Sensorsystems im Schnitt in Queransicht als M1 mit halbrundrohrförmigem Sensorträger 10 - bündig - mit halbrundrohrförmiger Druckverteilleiste / Gewichtsverteilleiste 9, als N1 mit halbrundrohrförmigem - innen - Sensorträger 10 mit halbrundrohrförmiger Druckverteilleiste/Gewichtsverteilleiste 9, als N2 mit halbrundrohrförmigem - außen - Sensorträger 10 mit halbrundförmiger Druckverteilleiste/Gewichtsverteilleiste 9.

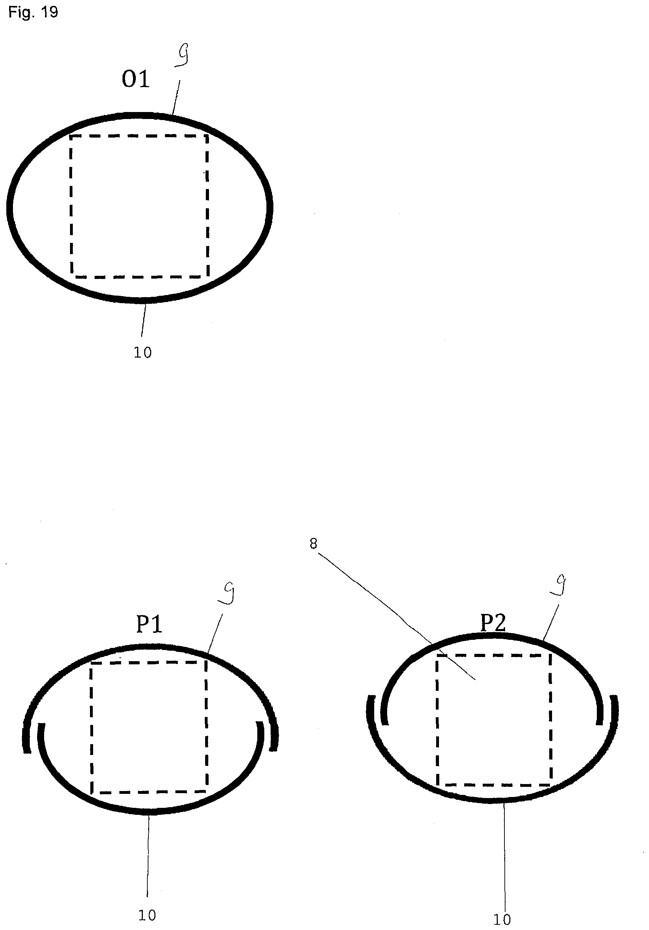

**Fig. 19** eine weitere beispielhafte Bauausführung des erfinderischen modularen Sensorsystems im Schnitt in Queransicht als O1 mit halbovalrohrförmigem - bündigem - Sensorträger 10 mit halbovalrohrförmiger Druckverteilleiste / Gewichtsverteilleiste 9, als P1 mit halbovalrohrförmigem - innen - Sensorträger 10 mit halbovalrohrförmiger Druckverteilleiste/Gewichtsverteilleiste 9, als P2 mit halbovalrohrförmigem - außen - Sensorträger 10 mit halbovalrohrörmiger Druckverteilleiste/Gewichtsverteilleiste 9.

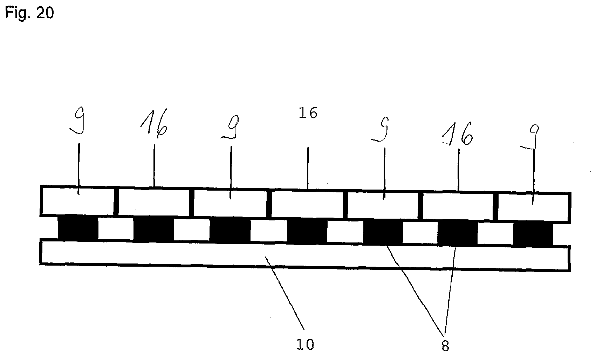

**Fig. 20** eine fünfte beispielhafte Bauausführung des erfinderischen modularen Sensorsystems im Schnitt in Seitenansicht mit jeweils einer Gewichtsverteilleiste 9 für einen Sensoren 8, die auf einem Sensorträger 10 gezeigt sind, wobei der jeweilige Sensor 8 direkt mit der jeweiligen Gewichtsverteilleiste 9 gekoppelt ist.

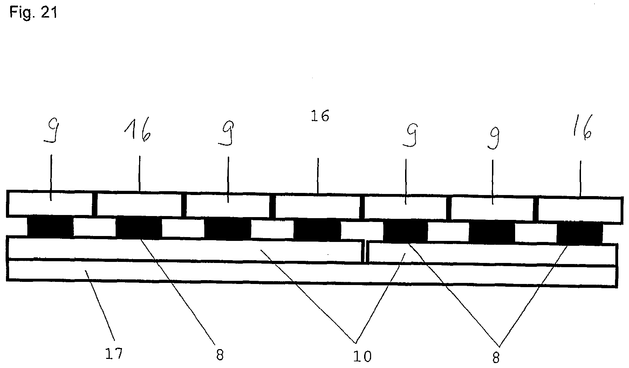

**Fig. 21** eine sechste beispielhafte Bauausführung des erfinderischen modularen Sensorsystems im Schnitt in Seitenansicht mit jeweils einer Gewichtsverteilleiste 9 für einen Sensoren 8, die auf zwei Sensorträgern 10 gezeigt sind, wobei der jeweilige Sensor 8 direkt mit der jeweiligen Gewichtsverteilleiste 9 gekoppelt ist und die Sensorträger auf einem Trägerelement 17 liegen.

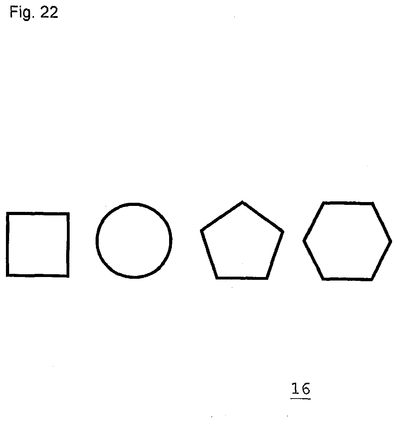

**Fig. 22** beispielhafte Bauausführung der Mess- bzw, Sensorpunkte 16 des Moduls Gewichtsverteilleiste 9 des erfinderischen modularen Sensorsystems in Aufsicht.

Dabei ist die der sensorrelevante Fühler bzw. Messpunkt 16 an, in und/oder durch die jeweilige Gewichtsverteilleiste 9 gekoppelt bzw. durchgeführt oder integriert.

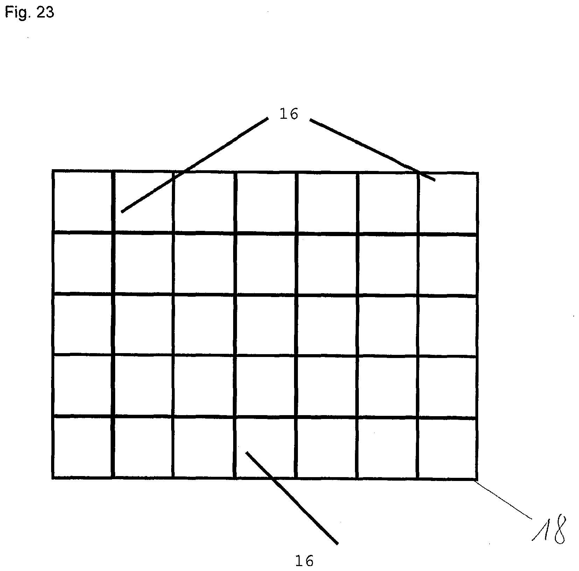

**Fig. 23** beispielhafte Bauausführung der Mess- bzw, Sensorpunkte des Moduls Gewichtsverteilleiste 9 als Flächenelemente 18 mit jeweiligen Messpunkten/Sensorpunkten 16 in vertikaler und horizontaler Anordnung des erfinderischen modularen Sensorsystems in Aufsicht.

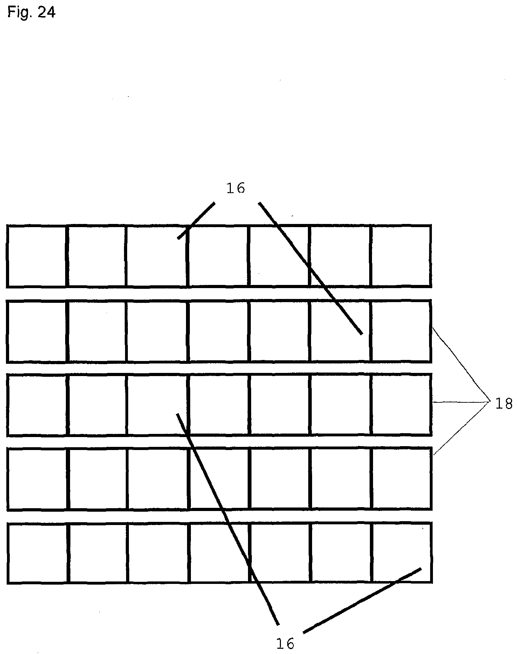

**Fig. 24** beispielhafte Bauausführung der Mess- bzw, Sensorpunkte des Moduls Gewichtsverteilleiste 9 als Flächenelemente 18 mit jeweiligen Messpunkten / Sensorpunkten 16 in streifenförmiger Anordnung des erfinderischen modularen Sensorsystems in Aufsicht.

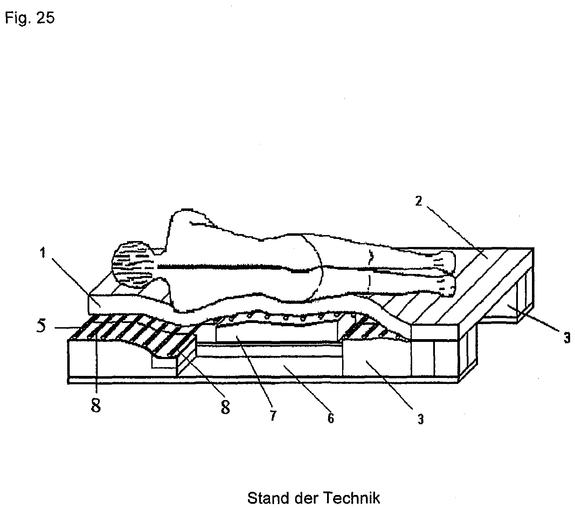

**Fig. 25** Aufbau einer Lattenrostmatratze aus dem **Stand der Technik.** Der aus einzelnen Latten bestehende Lattenrost 5, die auf Längsholmen 3 zu liegen kommen, ermöglichen eine körpernahe Unterstützung der auf der elastischen Auflage 1 mit Matratzendrell 2 liegenden Person. Die Längsholme 3 liegen auf zwei Trägern auf, die den Grundrahmen 6 bilden. Ein mittig angebrachtes Beckenpolster 7 unterstützt die Lagerung und ist individuell anpassbar. Im Stand der Technik sind Sensoren 8 auf den Latten aufgebracht.

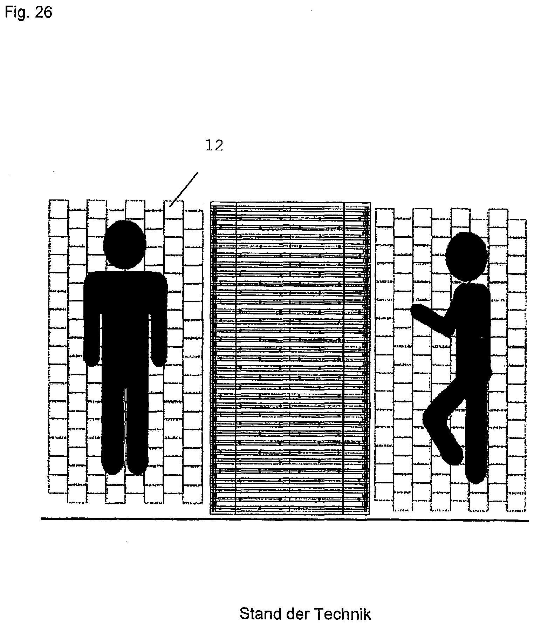

**Fig. 26** Beispielhafte Liegepositionen auf einer Lattenrostmatratze aus dem **Stand der Technik** mit Verteilung der Druckbereiche 12.

### Bezugszeichenliste

- 1: Elastische Auflage
- 2: Matratzendrell
- 3: Längsholme
- 4: Elemente zur Schulterabsenkung
- 5: Lattenrost
- 6: Grundrahmen
- 7: Beckenpolster
- 8: Sensor
- 9: Gewichtsverteilleiste
- 10: Sensorträger
- 11: Fixierpunkte
- 12: Druckbereich
- 13: Smart Beacon Device (SBD)
- 14: Verbindung
- 15: Stromversorgung
- 16: Messpunkt/Sensorpunkt
- 17: Trägerelement
- 18: Flächenelement

## Patentansprüche

1. Modulares Sensorsystem für einen Lattenrost oder eine Lattenrostmatratze, aus drei Modulen mit zumindest einem Sensor (8), einem Sensorträger (10) und einer Gewichtsverteilleiste (9), die sandwichartig miteinander verbindbar sind, wobei der zumindest eine Sensor dafür vorgesehen ist, zwischen dem Sensorträger und der Gewichtsverteilleiste angeordnet zu werden
wobei das modulare Sensorsystem konfiguriert ist, in einem Lattenrost oder einer Lattenrostmatratze mit einer Mehrzahl von Latten verwendet zu werden, wobei das modulare Sensorsystem konfiguriert ist, eine Latte des Lattenrosts oder der Lattenrostmatratze zu ersetzen.

2. Modulares Sensorsystem nach Anspruch 1, wobei der zumindest eine Sensor (8), der Sensorträger (10) und die Gewichtsverteilleiste (9) in einer Ebene sandwichartig miteinander verbindbar sind.

3. Modulares Sensorsystem nach einem der vorhergehenden Ansprüche, **dadurch gekennzeichnet, dass** der zumindest eine Sensor (8) einen Gewichtssensor und einen Temperatur-, Feuchte-, Beschleunigungs- und/oder einen Positionsbestimmungssensor im Raum aufnimmt oder aufweist.

4. Modulares Sensorsystem nach einem der vorhergehenden Ansprüche, **dadurch gekennzeichnet, dass** der Sensorträger (10) an eine Gewichtsverteilleiste (9) koppelbar ist.

5. Modulares Sensorsystem nach einem der vorhergehenden Ansprüche, **dadurch gekennzeichnet, dass** das modulare Sensorsystem mit seinen jeweiligen Sensoren (8) an zumindest ein Smart Beacon Device (SBD) (13) koppelbar ist.

6. Modulares Sensorsystem nach einem der Ansprüche 1 bis 4, **dadurch gekennzeichnet, dass** zumindest ein Smart Beacon Device (SBD) (13) in das jeweilige modulare Sensorsystem baulich integrierbar ist.

7. Modulares Sensorsystem nach einem der vorhergehenden Ansprüche, **dadurch gekennzeichnet, dass** das modulare Sensorsystem mit seinen jeweiligen Sensoren (8) an zumindest ein Funk-Modul mit Ultrabreitband (UWB), WLAN, Bluetooth oder anderer Funktechnik mit für die Positionsermittlung geeigneten Frequenzen koppelbar ist.

8. Modulares Sensorsystem nach einem der Ansprüche 1 bis 6, **dadurch gekennzeichnet, dass** das modulare Sensorsystem mit seinen jeweiligen Sensoren (8) an zumindest ein Funk-Modul mit Ultrabreitband (UWB), WLAN, Bluetooth oder anderer Funktechnik mit für die Positionsermittlung geeigneten Frequenzen in das jeweilige modulare Sensorsystem baulich integrierbar ist.

9. Modulares Sensorsystem nach einem der Ansprüche 1 bis 6, **dadurch gekennzeichnet, dass** der zumindest eine Sensor (8) des modularen Sensorsystems mit zumindest einem Funk-Modul mit Ultrabreitband (UWB), WLAN, Bluetooth oder anderer Funktechnik mit für die Positionsermittlung geeigneten Frequenzen baulich integrierbar ist.

10. Verwendung des modularen Sensorsystems nach einem der vorhergehenden Ansprüche in einem Lattenrost oder einer Lattenrostmatratze.

11. Lattenrost oder Lattenrostmatratze mit einem modularen Sensorsystem nach einem der Ansprüche 1 bis 9.

## Claims

1. A modular sensor system for a slatted frame or slatted mattress, comprising three modules with at least one sensor (8), a sensor support (10) and a weight distribution bar (9) which are connectable to each other in a sandwich-like manner, the at least one sensor being provided therefor, between the sensor support and the weight distribution bar, wherein the modular sensor system is configured to be used in a slatted frame or slatted mattress with a plurality of slats, wherein the modular sensor system is configured to replace a slat of the slatted frame or slatted mattress.

2. The modular sensor system of claim 1, wherein the at least one sensor (8), the sensor support (10) and the weight distribution bar (9) are connectable to each other in a sandwich-like manner in one plane.

3. The modular sensor system according to any one of the preceding claims,
wherein the at least one sensor (8) accommodates or comprises a weight sensor and a temperature, humidity, acceleration and/or a position determination sensor in space.

4. The modular sensor system according to any one of the preceding claims,
wherein the sensor support (10) is couplable to a weight distribution bar (9).

5. The modular sensor system according to any one of the preceding claims,
wherein the modular sensor system with its respective sensors (8) is couplable to at least one smart beacon device (SBD) (13).

6. The modular sensor system according to any one of claims 1 to 4, wherein at least one smart beacon device (SBD) (13) can be structurally integrated into the respective modular sensor system.

7. The modular sensor system according to one of the preceding claims, wherein the modular sensor system with its respective sensors (8) can be coupled to at least one radio module with ultra-wideband (UWB), WLAN, Bluetooth or other radio technology with frequencies suitable for position determination.

8. The modular sensor system according to one of claims 1 to 6, wherein the modular sensor system with its respective sensors (8) can be structurally integrated into the respective modular sensor system with at least one radio module with ultra-wideband (UWB), WLAN, Bluetooth or other radio technology with frequencies suitable for position determination.

9. The modular sensor system according to one of claims 1 to 6, wherein the at least one sensor (8) of the modular sensor system can be structurally integrated with at least one radio module with ultra-wideband (UWB), WLAN, Bluetooth or other radio technology with frequencies suitable for position determination.

10. Use of the modular sensor system according to one of the preceding claims in a slatted frame or a slatted mattress.

11. Slatted frame or slatted mattress with a modular sensor system according to any one of claims 1 to 9.

## Revendications

1. Système modulaire de capteurs pour un sommier à lattes ou un matelas à lattes, comprenant trois modules avec au moins un capteur (8), un support de capteur (10) et une barre de distribution de poids (9) qui peuvent être connectés l'un à l'autre en forme de sandwich, ledit au moins un capteur étant prévu pour être placé entre le support de capteur et la barre de distribution de poids, dans lequel le système modulaire de capteurs est configuré pour être utilisé dans un sommier à lattes ou un matelas à lattes avec une pluralité de lattes, dans lequel le système modulaire de capteurs est configuré pour remplacer une latte du sommier à lattes ou du matelas à lattes.

2. Système modulaire de capteurs selon la revendication 1, dans lequel l'au moins un capteur (8), le support de capteur (10) et la barre de répartition du poids (9) peuvent être pris en sandwich dans un plan.

3. Système modulaire de capteurs selon l'une des revendications précédentes, dans lequel ledit au moins un capteur (8) accueille ou présente un capteur de poids et un capteur de température, d'humidité, d'accélération et/ou de détermination de position dans l'espace.

4. Système modulaire de capteurs selon l'une des revendications précédentes, dans lequel le support de capteurs (10) peut être couplé à une barre de distribution de poids (9).

5. Système modulaire de capteurs selon l'une des revendications précédentes, **caractérisé en ce que** le système modulaire de capteurs avec ses capteurs respectifs (8) est couplable à au moins un Smart Beacon Device (SBD) (13).

6. Système modulaire de capteurs selon l'une des revendications 1 à 4, **caractérisé en ce qu'**au moins un Smart Beacon Device (SBD) (13) est intégrable par construction dans le système modulaire de capteurs respectif.

7. Système modulaire de capteurs selon l'une des revendications précédentes, **caractérisé en ce que** le système modulaire de capteurs avec ses capteurs respectifs (8) est couplable à au moins un module radio à ultra large bande (UWB), WLAN, Bluetooth ou autre technologie radio avec des fréquences appropriées pour la détermination de la position.

8. Système modulaire de capteurs selon l'une des revendications 1 à 6, **caractérisé en ce que** le système modulaire de capteurs avec ses capteurs respectifs (8) est intégrable par construction dans le système modulaire de capteurs respectif à au moins un module radio à bande ultralarge (UWB), WLAN, Bluetooth ou autre technique radio avec des fréquences appropriées pour la détermination de la position.

9. Système modulaire de capteurs selon l'une des revendications 1 à 6, **caractérisé en ce que** l'au moins un capteur (8) du système modulaire de capteurs est intégrable par construction à au moins un module radio à bande ultralarge (UWB), WLAN, Bluetooth ou autre technique radio avec des fréquences appropriées pour la détermination de la position.

10. Utilisation du système de détection modulaire selon l'une des revendications précédentes dans un sommier à lattes ou un matelas à lattes.

11. Sommier à lattes ou matelas à lattes comportant un système modulaire de capteurs selon l'une quelconque des revendications 1 à 9.
